# EUROPÄISCHE PATENTSCHRIFT

(11) **EP 1 149 992 B1**
(45) Veröffentlichungstag und Bekanntmachung des Hinweises auf die Patenterteilung: **24.05.2006**
(21) Anmeldenummer: 01104251.2
(22) Anmeldetag: 22.02.2001
(51) Int. Cl.: F01N 3/28

(54) **Abgasvorrichtung einer Abgasanlage, insbesondere Kraftfahrzeug-Katalysator in Modulbauweise**
Exhaust assembly for an exhaust gas system, especially exhaust gas catalyst of modular construction for a motor vehicle
Ensemble d'échappement pour un système de gaz d'échappement, en particulier catalyseur de gaz d'échappement à construction modulaire pour véhicule

(30) Priorität: 26.04.2000 DE 10020492
(43) Veröffentlichungstag der Anmeldung: 31.10.2001
(73) Patentinhaber: J. Eberspächer GmbH & Co. KG, 73730 Esslingen (DE)
(72) Erfinder: Wörner, Siegfried, 73734 Esslingen (DE); Wirth, Georg, 73230 Kirchheim/Teck (DE); Zacke, Peter, Dr., 73095 Albershausen (DE); Schlenker, Friedrich, 73207 Plochingen (DE)

(56) Entgegenhaltungen:
- EP-A- 0 450 348
- EP-A- 0 724 070
- WO-A-98/50688
- DE-A- 3 506 219
- DE-U- 9 210 836
- US-A- 4 002 433

## Beschreibung

Die Erfindung betrifft eine Abgasvorrichtung nach dem Oberbegriff von Anspruch 1.

Eine derartige Abgasanlage ist z.B. aus der EP 0 450 348 bekannt.

Durch die Modultechnik ist es möglich, Katalysatoren aus standardisierten Einzelteilen wie Eingangstrichter, Monolithlager bzw. Lagerrohr und Ausgangstrichter zusammenzusetzen und beliebig zu kombinieren. So können bei vorgegebener Anordnung der Rohre (Ausrichtung der Trichteranschlüsse) verschiedene Monolithlängen und damit für die Emissionen wichtige Katalysatorvolumina durch Anpassung der Mittelstücke mit geringen Werkzeugkosten für ein Fahrzeug mit unterschiedlichen Motorisierungen oder Forderungen an Qualität und Lebensdauer der Abgasnachbehandlung dargestellt werden.

Es hat sich nun herausgestellt, daß bei der bisherigen Modulbauweise bei hoher thermischer Wechsellast häufig Risse und Brüche im Innentrichter aufgetreten sind.

Der Erfindung liegt die Aufgabe zugrunde, eine Abgasvorrichtung der eingangs genannten Art bereitzustellen, bei der ein Anschlagen des Innentrichters am Lagerrohr vermieden werden kann.

Diese Aufgabe wird durch den Gegenstand des unabhängigen Anspruchs gelöst. Vorteilhafte Weiterbildungen ergeben sich aus den Unteransprüchen.

Das hineinreichende Axialende des Innentrichter-Endabschnitts kann im Bereich des Axialendes des Lagerrohrs einen radial nach außen erweiterten Absatz aufweisen, wobei vorzugsweise im Absatz der Monolith bzw. der Partikelfilter mit Abstand eingepaßt ist.

Eine "weiche" Gestaltung eines Innentrichters ergibt sich, wenn dieser auf dem Umfang verteilte flächige, gewölbte Wärmespannungs-Ausgleichszonen besitzt.

Um den Innentrichter gleichwohl "steif" zu gestalten, können vorzugsweise Versteifungssicken vorgesehen sein.

Das Axialende des Innentrichter-Endabschnitts kann an der zugewandten Stirnseite einer Lagermatte abgestützt sein.

Auch kann das Axialende des Innentrichter-Endabschnitts an einem stirnseitigen Kantenschutz einer Lagermatte, insbesondere einer Quellmatte, abgestützt sein, wobei der Kantenschutz vorzugsweise eine Imprägnierung bzw. ein imprägnierter Bereich der Lagermatte ist.

Ein vorteilhafter Kantenschutz ist auch dann gegeben, wenn das Axialende des Innentrichter-Endabschnitts an der zugewandten Stirnseite eines Drahtgestrickringes abgestützt ist, der im Lagermattenspalt axialendseitig vorgelagert ist.

Das Axialende des Außentrichter-Endabschnitts kann ein radial nach außen gerichter Umfangsflansch des Außentrichters sein, der bestimmte Vorteile bietet, die nachstehend noch genannt werden.

Alternativ kann mit anderen nachfolgend noch genannten Vorteilen das Axialende des Außentrichter-Endabschnitts ein radial nach innen gerichteter Umfangsflansch des Außentrichters sein.

Bestimmte noch angeführte Vorteile ergeben sich, wenn das Axialende des Außentrichter-Endabschnitts ein koaxial und auf dem Außenumfang dicht beabstandet zum Lagerrohr-Endabschnitt verlaufender Umfangsabschnitt ist.

Wie der Außentrichter-Endabschnitt, so kann auch das Axialende des Innentrichter-Endabschnitts ein radial nach außen gerichteter Umfangsflansch sein.

Der zwischen Außentrichter und Innentrichter gelegene Ringraum ist vorzugsweise ein wärmeisolierender Luftspalt oder alternativ zumindest teilweise mit einem wärmeisolierenden Material ausgefüllt.

Noch genannte Vorteile ergeben sich, wenn die Lagermatte eine elastische Keramikfasermatte ist, vorzugsweise aus kristallinen Aluminiumoxidfasern oder aus amorphen Aluminiumsilikatfasern aufgebaut ist.

An jedem der beiden Axialenden des Lagerrohrs oder Mittelstücks kann ein Abgastrichter vorgesehen sein, wobei der eine Abgastrichter dann ein Einlaßtrichter und der andere Abgastrichter ein Auslaßtrichter ist.

Einlaßtrichter und Auslaßtrichter sind zweckmäßigerweise zumindest größtenteils gleich aufgebaut.

Der Außentrichter und der Innentrichter können Tiefziehteile oder aber auch Drück-, Wickel- oder Halbschalenteile sein.

Problematisch ist die Bildung einer Wärmebrücke an den Verbindungsstellen zwischen Abgastrichter(n) und Mittelstück bzw. Lagerrohr, da das Mittelstück mit Außen- und Innentrichtern gemeinsam verschweißt werden, und so die Isolation zwischen Trichter und Monolithlager durch Wärmeleitung im Werkstoff vom Innentrichter zur Außenhülle unterbrochen ist.

Dies wird durch den freien Auslauf des Innentrichters an die Lagermatte des Monolithen verhindert (nur noch einseitig gelagerter, also "fliegender Innentrichter"). Dabei ist es sinnvoll, zur Lagerung des Monolithen eine elastische Keramikfasermatte, bevorzugt aus kristallinen Aluminiumoxidfasern oder amorphen Aluminiumsilikatfasern zu verwenden, um so die Bewegungen des Trichters aus Wärmedehnung und Schwingungsanregung im System elastisch aufzunehmen. Ein Aufbau mit bisher üblichen Quellmatten mit körnigem Blähglimmer kann an dieser Stelle zu Schäden am Monolithlager führen (Glimmer wird an der Berührungsstelle herausgelöst und zerstört als "körniges Strahlmittel" die dahinterliegende Lagermatte). Ein Aufbau mit Quellmatte als Lagermatte läßt sich stabilisieren, wenn gepreßte Drahtgestrickringe als Kantenschutz am Anschluß zwischen Trichter und Quellmatte montiert werden. Dabei wird jedoch die schlechte Isolierwirkung der Gestrickringe über dem Monolith in Kauf genommen.

Dadurch wird gleichzeitig der Aufbau von Spannungen im heißen Innentrichter in axialer und radialer Richtung, die bei der bisherigen Modulbauweise bei hoher thermischer Wechsellast häufig zu Rissen und Brüchen im Innentrichter geführt hat, vermieden. Bei der praktischen Ausführung der Verbindung hilft die hohe Elastizität und der geringe Gehalt an Festkörpern bei den kristallinen Keramikfasermatten beim Entwurf einer dauerhaltbaren Verbindung. Diese Matten können am Anschluß, bei Bedarf, auch mit einem größeren Spalt als in der Monolithlagerung montiert werden, ohne daß ihre Erosionsempfindlichkeit bei Beaufschlagung mit pulsierendem heißen Abgas ansteigt. So ist es mit bekannten Keramikfasermatten bezüglich der Erosion möglich, den Spalt am Anschluß um 20% aufzuweiten, während Quellmatten hier nur etwa 10% zulassen, ohne daß das System im Dauerlauf Schäden erleidet. Damit ist ein Aufbau in der nachfolgend beschriebenen Weise ohne metallischen Kontakt zwischen Innentrichter, Außentrichter und Lagerungsgehäuse unter Berücksichtigung der betrieblichen Wärmedehnung der Teile und üblicher Bauteiltoleranz der Blechteile bei vertretbaren Kosten überhaupt erst möglich. Selbstverständlich kann die Fasermatte zur Ausbildung eines Anschlusses mit größerem Lagerspalt durch Aufdoppelung oder Umschlag in diesem Bereich gezielt verdichtet werden.

Bei der praktischen Ausführung der "heißgehenden" Innentrichter muß durch entsprechende Formgebung eine ausreichende Steifigkeit erzeugt werden, um ein Zusammenfallen der Trichter und/oder eine Kollision mit dem keramischen Monolithen oder den Außenteilen zu vermeiden. Hierzu wird erfindungsgemäß vorgeschlagen, den Anschlußbereich am Monolithende stufig abzusetzen. Hiermit wird gleichzeitig eine Strömungsführung auf den Monolithen und nicht in die Lagermatte (am Eingangstrichter) erzeugt.

Die Isolation am Übergangsbereich erfolgt durch die Luftspalte zwischen den Bauteilen. Dies ist bei den in den Abgasprüfungen üblichen Temperaturen von weniger als 600°C am Abgas genügend, da die Behinderung des Strahlungsdurchganges durch Faserisolationen erst bei höheren Temperaturen deutliche Wirkung auf den Wärmeübergang ausübt. Durch Ausrundung der Bauteile und entsprechende Toleranzabstimmung (nach Lage und Größe) der Isolier- und Lagermatten läßt sich bei der Montage auch der Luftspalt mit Fasermaterial füllen, ohne daß dieses im Betrieb, bei Bewegung der Bauteile zueinander, zerstört wurde.

Praktisch ausgeführt wird die Bauweise in der einfachsten Form durch eine mit dem Außentrichter bündig abschlie-ßenden Innentrichter, der bei der Montage an der Lagermatte des Mittelstückes zur Anlage kommt. Hierbei ist der Innentrichter in Strömungsrichtung beschnitten und kann somit am günstigsten als Tiefziehteil bei nicht zu großer Trichterlänge (= Ziehtiefe) in Ziehrichtung mit Folgewerkzeugen beschnitten werden. Selbstverständlich kann auch bei einer Trichterfertigung als Drück-, Wickel- oder Halbschalenteil mit einem gesonderten Arbeitsgang ein Beschnitt in Strömungsrichtung erfolgen. Am Außentrichter können über die Flanschausbildung am Anschluß Form und Lagertoleranzen des Gehäuses (z.B. aus der Kalibrierung, Spaltanpassung beim Canning der Monolithe) durch veränderte Lage der Schweißnaht aufgenommen werden. Für die Schweißung müssen die Teile bei der Montage zueinander ausgerichtet werden, um auch bei Lageveränderung der Anschlüsse durch unterschiedliche Wärmedehnungen im Betrieb einen ausreichenden Abstand zwischen Innentrichter, Außentrichter, Gehäusemantel und Monolith sicherzustellen. Nur so können Klappergeräusche und Wärmebrücken im Betrieb vermieden werden.

Weitere spezifische Ausgestaltungen sind in der Figurenbeschreibung erläutert.

Ein Abgastrichter läuft an einer Monolithlagerungsmatte aus, wobei ein weicher Ausschlag des Innentrichters zur Lagermatte vorhanden ist. Besonderer Vorteil ist, daß am Katalysator weniger Wärme abgegeben wird, weniger Trichterschäden bei scharfer Beanspruchung gegenüber bekannten Ausführungen auftreten, und die Abgasvorrichtung im Test weniger auskühlt (Emmissionen). Gleichwohl bleibt die Modultechnik erhalten.

Die Erfindung wird nachfolgend anhand von Ausführungsbeispielen unter Bezugnahme auf die beigefügte Zeichnung näher erläutert; es zeigen:
- Figuren 1 und 2: eine erste Ausführungsvariante einer gattungsgemäßen Abgasvorrichtung in einem schematischen Axialschnitt sowie in einer vergrößerten Einzelheit A,
- Figur 3: eine zweite Ausführungsvariante in einem schematischen Axial-Teilschnitt,
- Figur 4: eine dritte Ausführungsvariante ähnlich Figur 3,
- Figur 5: eine vierte Ausführungsvariante,
- Figur 6: eine fünfte Ausführungsvariante, in welcher der Grundgedanke der Erfindung verwirklicht ist,
- Figur 7: eine sechste Ausführungsvariante,
- Figur 8: eine siebte Ausführungsvariante, und
- Figur 9: eine achte Ausführungsvariante, in welcher der Grundgedanke der Erfindung verwirklicht ist.

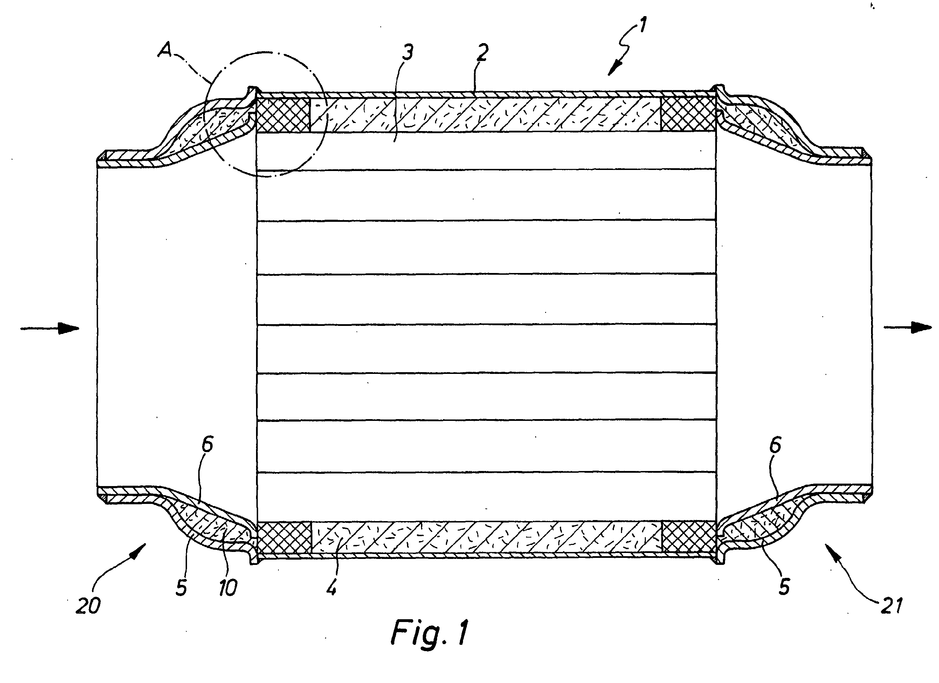

Gemäß Figur 1 umfaßt eine Abgasvorrichtung 1 einer Abgasanlage, insbesondere ein Kraftfahrzeug-Katalysator oder Partikelfilter in Modulbauweise, zwei Abgastrichter 20, 21 und ein dazwischen liegendes angeschlossenes koaxiales Lagerrohr 2 jeweils aus Blech, in dem ein Monolith 3 unter Zwischenordung einer den Monolith umgebenden Lagermatte 4 isoliert und gelagert ist.

Die Abgastrichter sind doppelwandig aus zwei Formteilen zusammengesetzt. Jeder Abgastrichter besteht aus einem Außentrichter 5 und einem Innentrichter 6.

Wichtig bei samtlichen nachfolgenden Ausführungsbeispielen ist, daß nur der Außentrichter 5 am Lagerrohr 2 metallisch anliegt und befestigt, insbesondere verschweißt ist, während der Innentrichter 6 berührungsfrei in einem Abstand zum Lagerrohr 2 gelegen ist.

Im besonderen ist der vom Außentrichter-Endabschnitt 7 und vom zugewandten befestigten Lagerrohr-Endabschnitt 9 in einem Abstand gelegene berührungsfreie Innentrichter-Endabschnitt 8 in radial mittlerer Höhe der Lagermatte 4 und auf dem Umfang des Innentrichters 6 gelegen.

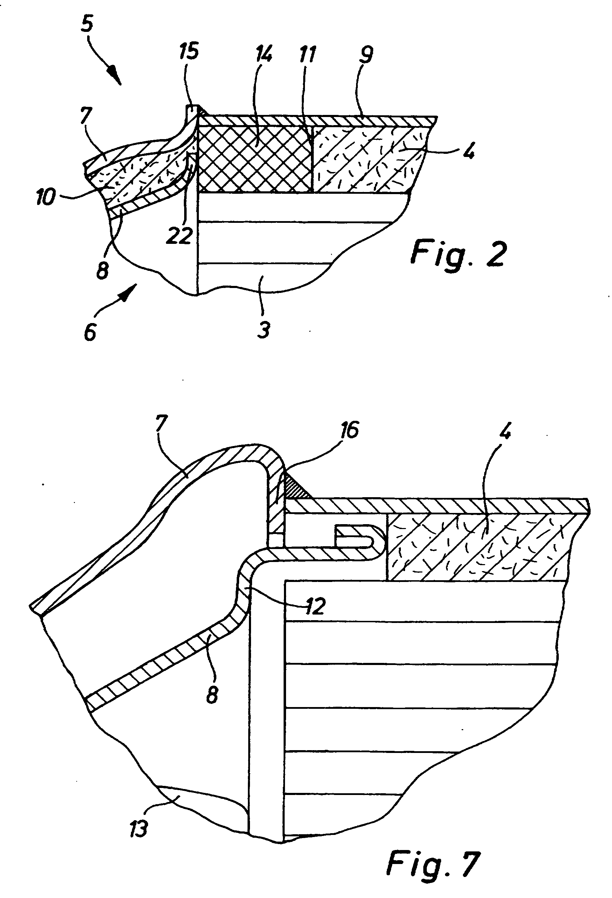

Die Axialenden des Außentrichter-Endabschnitts 7 und des Innentrichter-Endabschnitts 8 verlaufen nach dem ersten Ausführungsbeipiels nach den Figuren 1 und 2 bündig zueinander.

Das Axialende des Innentrichter-Endabschnitts 8 ist an der zugewandten Stirnseite eines Drahtgestrickringes 14 abgestützt, der in einem Lagermattenspalt 11 axialendseitig vorgelagert ist und einen Kantenschutz ausbildet. Der Kantenschutz kann auch ein Imprägnierung der Lagermatte 4 selbst sein.

Das Axialende des Außentrichter-Endabschnitts 7 wird durch einen radial nach außen gerichten Umfangsflansch 15 des Außentrichters 5 ausgebildet.

Das Axialende des Innentrichter-Endabschnitts 8 ist ebenfalls ein radial nach außen gerichteter Umfangsflansch 22.

Der Raum zwischen dem Außentrichter 5 und dem Innentrichter 6 ist mit einem wärmeisolierenden Material 10 ausgefüllt. Er kann auch ein Luft enthaltender Leerraum sein.

Außen- und Innentrichter sind auf der dem Lagerrohr 2 bzw. Katalysator-Mittelstück abgewandten Axialende miteinander verschweißt.

An jedem der beiden Axialenden des Lagerrohrs 2 ist ein Abgastrichter vorgesehen, wobei der eine Abgastrichter ein Einlaßtrichter 20 und der andere Abgastrichter ein Auslaßtrichter 21 ist.

Einlaßtrichter 20 und Auslaßtrichter 21 sind gleich aufgebaut.

Außentrichter 5 und Innentrichter 6 sind Tiefziehteile, können aber auch Drück-, Wickel- oder Halbschalenteile sein.

Die erste Ausführungsvariante nach den Figuren 1 und 2 sieht also in der einfachsten Erfindungsform einen mit dem Au-ßentrichter bündig abschließenden Innentrichter vor, der bei der Montage an der Lagermatte des Mittelstückes zur Anlage kommt. Hierbei ist der Innentrichter in Strömungsrichtung S beschnitten und kann somit am günstigsten als Tiefziehteil bei nicht zu großer Trichterlänge (= Ziehtiefe) in Ziehrichtung mit Folgewerkzeugen beschnitten werden. Selbstverständlich kann auch bei einer Trichterfertigung als Drück-, Wikkel- oder Halbschalenteil mit einem gesonderten Arbeitsgang ein Beschnitt in Strömungsrichtung erfolgen. Am Außentrichter können über die Flanschausbildung am Anschluß Form und Lagertoleranzen des Gehäuses (z.B. aus der Kalibrierung, Spaltanpassung beim Canning der Monolithe) durch veränderte Lage der Schweißnaht aufgenommen werden. Für die Schweißung müssen die Teile bei der Montage zueinander ausgerichtet werden, um auch bei Lageveränderung der Anschlüsse durch unterschiedliche Wärmedehnungen im Betrieb einen ausreichenden Abstand zwischen Innentrichter, Außentrichter, Gehäusemantel und Monolith sicherzustellen. Nur so können Klappergeräusche und Wärmebrücken im Betrieb vermieden werden.

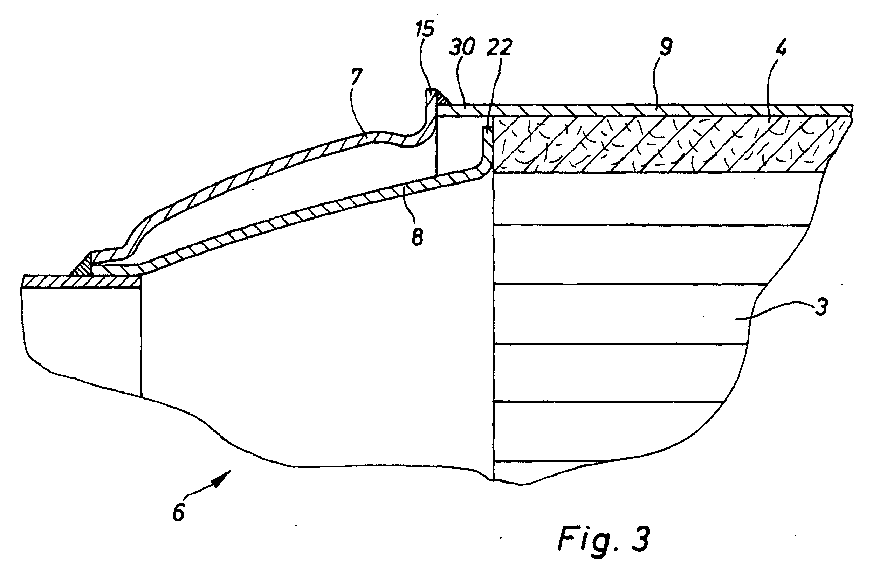

In der zweiten Ausführungsvariante nach Figur 3 weist das Axialende des Lagerrohr-Endabschnitts 9 einen Verlängerungsabschnitt 30 auf, der bezüglich der Lagermatte 4 und des Monoliths 3 bzw. Partikelfilters axial vorsteht. Dies ermöglich eine kurze axiale Baulänge eines Innentrichters, der dann vorzugsweise mit einer geringen Ziehtiefe und mithin als Tiefziehteil ausgebildet werden kann.

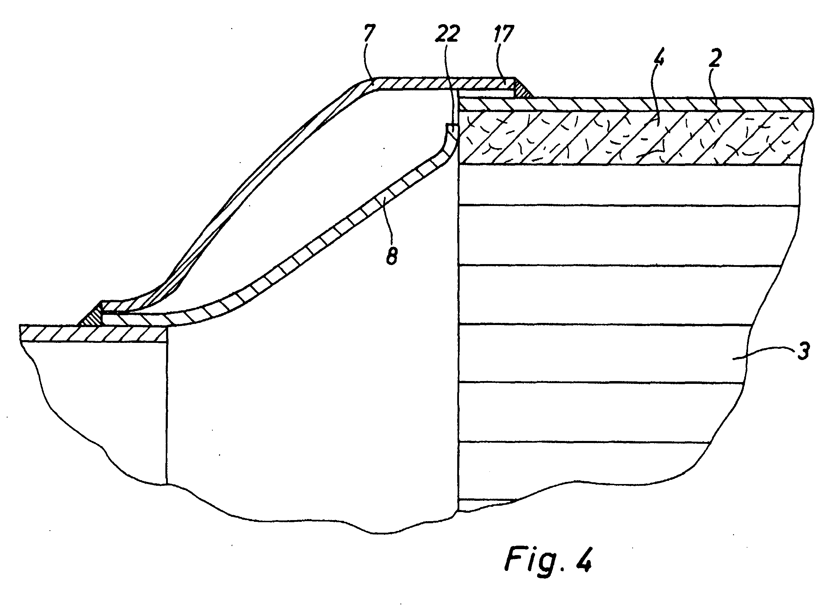

In der dritten Ausführungsvariante nach Figur 4 ist das Axialende des Außentrichter-Endabschnitts 7 ein koaxial und auf dem Außenumfang dicht beabstandet zum Lagerrohr-Endabschnitt 9 verlaufender Umfangsabschnitt 17.

Das Axialende des Innentrichter-Endabschnitts 8 weist radial nach außen, verläuft zum zugewandten Axialende des Lagerrohrs 2 bündig und stützt sich auf der zugewandten Stirnseite der Lagermatte 4 ab.

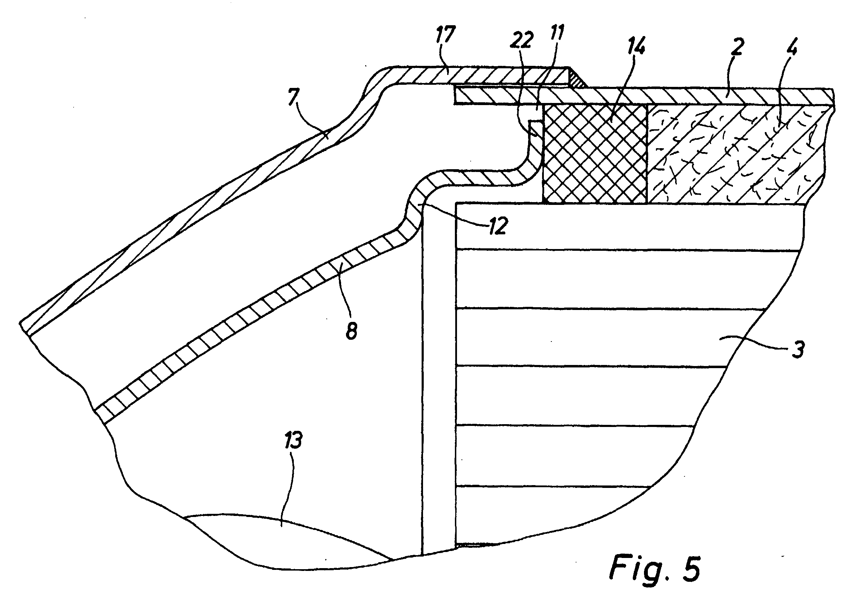

Die Variante dieser Bauart zeigt gemäß Figur 4 also einen über den Mantel des Mittelstückes geschobenen Außentrichter. Hier läßt sich die Anlage des Innentrichters an die Lagermatte mit dem Aufschieben des Außentrichters einstellen, so daß ein Luftspalt mit Unterbrechung der Isolation vermieden wird. Dabei ist es jedoch erforderlich, Gehäusemantel und Außentrichter an der Fügestelle zueinander zu kalibrieren. Je nach Ausführung und Montage der Teile zueinander ändert sich die Gesamtlänge des Katalysators. In der vierten Ausführungsvariante nach Figur 5 reicht das Axialende des Innentrichter-Endabschnitts 8 in den Lagermattenspalt 11 zwischen Lagerrohr 2 und Monolith 3.

Das in den Lagermattenspalt 11 hineinreichende Axialende des Innentrichter-Endabschnitts 8 weist im Bereich des Axialendes des Lagerrohrs 2 einen radial nach außen erweiterten Absatz 12 auf, in welchen der Monolith 3 mit Abstand eingepaßt ist.

Der Innentrichter 6 umfaßt auf dem Umfang vier gleich verteilte flächige, gewölbte Wärmespannungs-Ausgleichszonen 13. Zusätzlich können Versteifungssicken vorgesehen sein.

Durch ein Absetzen des Innentrichters am Monolithanschluß in Figur 5 erhält man eine erhöhte Formsteifigkeit des Innentrichters. Hiermit wird gleichzeitig die Strömungsführung des Abgases zum Monolith und nicht in den Lagermattenspalt erreicht. An der Lagermatte des Monolithen ist hier wahlweise ein Kantenschutz in Form einer Imprägnierung oder eines eingelegten Drahtgestrickringes bei Einsatz einer Quellmatte dargestellt. Kommt eine elastische Keramikfasermatte als Monlithlagerung zum Einsatz, kann dieser Kantenschutz entfallen.

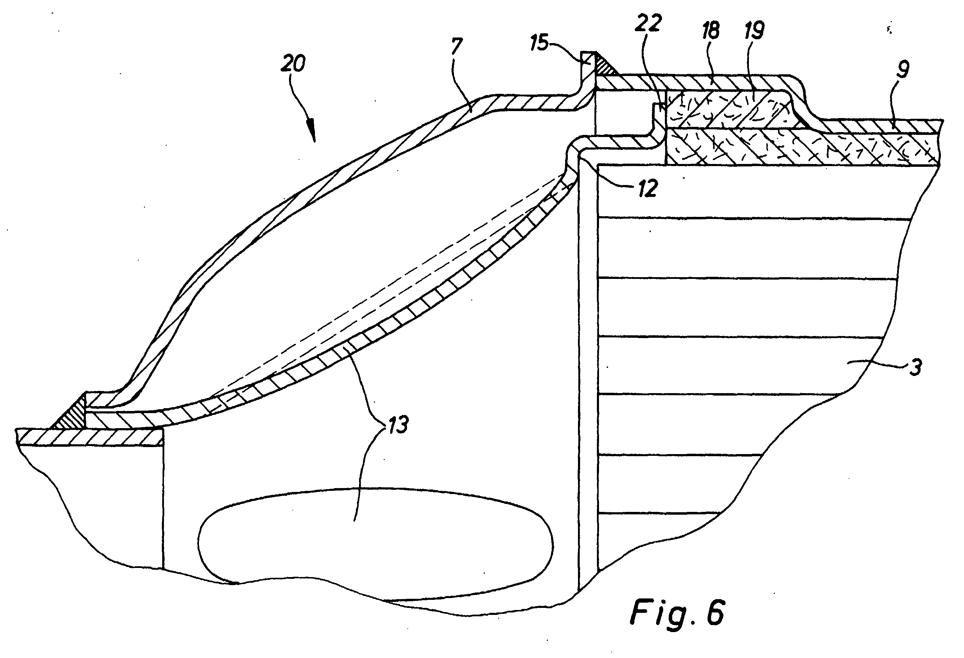

Nach der erfindungsgemäßen fünften Ausführungsvariante nach Figur 6 ist das koaxiale Axialende des Lagerrohr-Endabschnitts 9 aufgeweitet. Im aufgeweiteten koaxialen Axialende 18 des Lagerrohr-Endabschnitts 9 ist entweder die Lagermatte 4 umgeschlagen oder mit einem separaten Lagermatten-Umfangsabschnitt 19 aufgedoppelt.

Die fünfte Ausführungsvariante zeigt gemäß Figur 6 auch einen mit Absatz ausgesteiften Innentrichter, wie er in der vierten Ausführungsvariante nach Figur 5 vorgesehen ist. In Figur 6 wird die bevorzugte Anbindung des Außentrichters mit Flansch zum Gehäusemantel gezeigt. Um die Toleranzen der Bauteile im Anschlußbereich besser aufzufangen, ist das Gehäuse in diesem Beispiel im Anschlußbereich erweitert. Dies erfolgt bei Rohrmänteln beispielsweise durch Aufkalibrieren des Mantels im Anschlußbereich auf ein Fixmaß oder bei Halbschalenmänteln durch Absetzen des Anschlußbereiches. Üblich ist zum Beispiel ein Lagerspalt von 3 bis 6mm und ein Spalt im aufkalibrierten Bereich von 4 bis 9mm. Am großen Spalt erfolgt die Lagerung und Isolation bevorzugt durch eine elastische Keramikfasermatte. Diese zeigt auch bei deutlich vergrößertem Spalt noch keine Probleme mit der Erosionsbeständigkeit. Um die Lagerkräfte im Anschlußbereich am Monolith zu halten, kann hier die Matte auch durch Umschlagen oder Auflegen eines weiteren Fasermattenstreifens aufgedoppelt werden. Ebenso ist bei Einsatz einer Quellmatte an dieser Stelle die Montage eines entsprechend großen Drahtgestrickringes als Anlage für den Innentrichter und Erosionsschutz für die Quellmatte sinnvoll.

Eine Erhöhung der Bauteilelebensdauer ohne Bildung von Rissen im Innentrichter kann durch "weiche Gestaltung" der Form am Trichter erzielt werden. Hierzu sind möglichst große Übergangsradien bei der Fertigung (Ziehradien) und am fertigen Bauteil gefordert. Bei vorhandener, steifer Innenform wird durch Einbau von Sicken im Innentrichter die "weiche" Ableitung von thermisch bedingten Spannungen in großen, ebenen Flächen ermöglicht. Hierdurch wird ein Aufbau von Bruchkanten bei zyklischer, thermischer Belastung der Bauteile mit plastischer Verformung überbelasteter Bereiche vermieden. Praktisch dargestellt ist dies in Figur 5 in Form von ovalen "Beulen" in Durchströmungsrichtung.

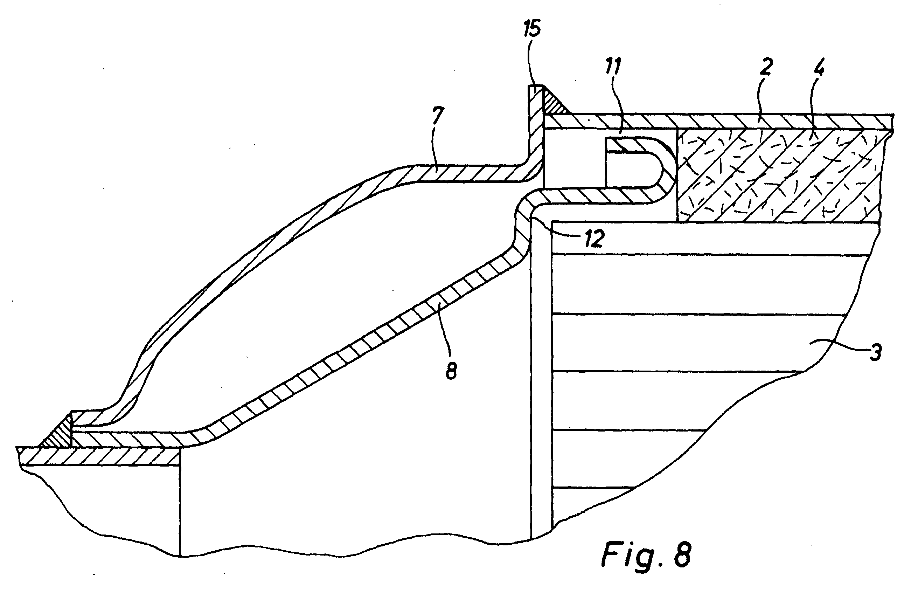

Eine sechste Ausführungsvariante nach Figur 7 umfaßt ein Axialende eines Außentrichter-Endabschnitts 7, welches ein radial nach innen gerichteter Umfangsflansch 16 des Außentrichters 5 ist. Das Axialende des Innentrichter-Endabschnitts 8 ist nach außen umgeschlagen.

Die Ausführungsvariante nach Figur 7 zeigt also einen von außen eingezogenen "Flansch" am Außentrichter. Derartige Formen sind zum Beispiel bei Fertigung des Außentrichters als IHU-Teil (IHU = Innen-Hochdruck-Umformung) und anschließendem Laserbeschnitt denkbar. Der Vorteil liegt im geringen Platzbedarf am Anschluß zum Innentrichter. Da zwischen Innentrichter und Außentrichter nicht mehr der Ziehradius des Außentrichters untergebracht werden muß, kann dieser Aufbau mit üblichen Lagermattenspalten am Mittelstück ohne Kollision der Teile erfolgen. Trotzdem bleibt am Außentrichter ein Anlagebereich zur Aufnahme von Toleranzen der Teile zueinander. Der Innentrichter ist zum Schutz der Lagermatte bei Berührung im Betrieb durch Umschlagen am Auslauf ausgerundet. Damit wird ein Zerschneiden der Fasern mit scharfen Kanten vermieden und trotzdem im engen Spalt ausreichend Abstand zu Monolith und Gehäusemantel eingehalten.

Eine siebte Variante gemäß Figur 8 zeigt eine Version mit großem Lagerspalt und zur Lagermatte umgeschlagenem Innentrichter. Die Außentrichteranbindung erfolgt wieder mit Flansch nach außen. Alle Bauteile sind mit heute üblichen Fertigungsverfahren einfach herzustellen. Die Toleranzsituation ist durch den großen Abstand der Teile zueinander entschärft.

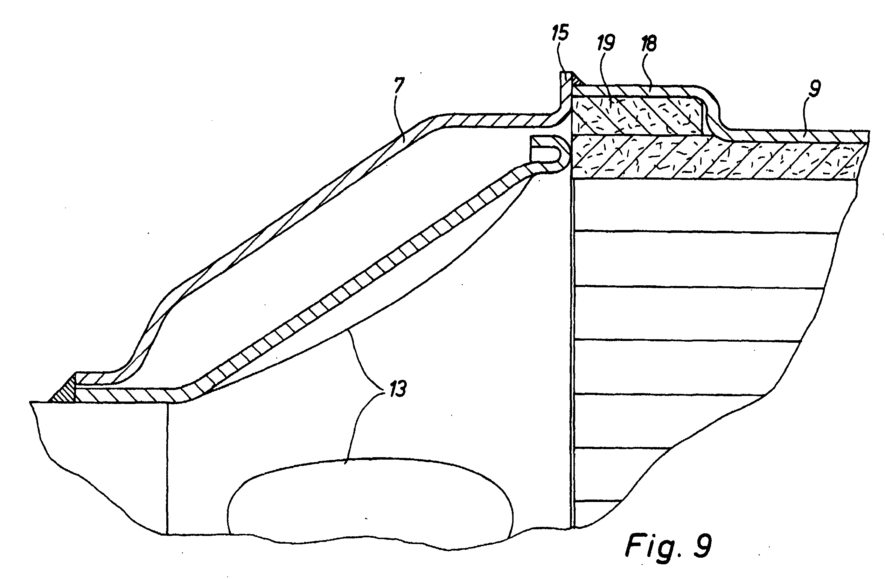

Schließlich sei auf die erfindungsgemäße achte Ausführungsvariante nach Figur 9 verwiesen, welche einen ähnlichen Aufbau mit zum Außentrichterflansch bündigem Innentrichter veranschaulicht. Durch Aufdoppeln der Lagermatte und Aufweiten des Lagerspaltes kann auch mit großen Ziehradien ausreichend Abstand zwischen den Teilen eingestellt werden. Der bündige Abschluß des Innentrichters verringert die Ziehtiefe gegenüber einer Ausführung mit vorgeschobenem Innentrichter und erleichtert das Vormontieren der Teile. Wahlweise sind hier wieder "Dehnungssicken" im Innentrichter dargestellt.

Bei der ersten, dritten, vierten und der achten Ausführungsvariante können durch Übermaß an den Mattenzuschnitten alle Hohlräume im Anschlußbereich mit den elastischen Keramikfasern der Isolation und/oder Lagerung verfüllt werden. Die übrigen Versionen haben im Anschlußbereich nur eine Luftspaltisolation mit Behinderung des Strahlungsdurchganges durch den Trichterüberstand.

## Patentansprüche

1. Abgasvorrichtung (1) einer Abgasanlage, insbesondere Kraftfahrzeug-Katalysator oder Partikelfilter in Modulbauweise, mit zumindest einem Abgastrichter (20, 21) und einem axial angeschlossenen Lagerrohr (2) jeweils aus Blech, in dem zumindest ein Monolith (3) oder Partikelfilter unter Zwischenordnung einer den Monolith oder Partikelfilter umgebenden Lagermatte (4) isoliert und gelagert ist,
wobei der Abgastrichter doppelwandig aus zwei Formteilen zusammengesetzt ist sowie einen Außentrichter (5) und einen Innentrichter (6) umfasst und wobei ein Außentrichter-Endabschnitt (7) am Lagerrohr (2) metallisch anliegt und befestigt, insbesondere verschweißt ist, während ein Innentrichter-Endabschnitt (8) berührungsfrei in einem Abstand zum Lagerrohr (2), zum Außentrichter-Endabschnitt (7) und zum Monolith (3) oder Partikelfilter gelegen ist,
**dadurch gekennzeichnet,**
**dass** das Lagerrohr (2) ein aufgeweitetes Axialende (18) aufweist.

2. Abgasvorrichtung nach Anspruch 1,
**dadurch gekennzeichnet,**
**daß** der Innentrichter-Endabschnitt (8) in radial mittlerer Höhe der Lagermatte (4) und auf dem Umfang des Innentrichters (6) gelegen ist.

3. Abgasvorrichtung nach Anspruch 2,
**dadurch gekennzeichnet,**
**daß** das Axialende des Lagerrohr-Endabschnitts (9) einen Verlängerungsabschnitt (30) aufweist, der bezüglich der Lagermatte (4) und des Monoliths (3) bzw. Partikelfilters axial vorsteht (Figur 3).

4. Abgasvorrichtung nach Anspruch 2,
**dadurch gekennzeichnet,**
**daß** die Axialenden des Außentrichter-Endabschnitts (7) und des Innentrichter-Endabschnitts (8) bündig zueinander verlaufen (Figuren 1, 2 und 9).

5. Abgasvorrichtung nach Anspruch 2,
**dadurch gekennzeichnet,**
**daß** das Axialende des Innentrichter-Endabschnitts (8) in einen Lagermattenspalt (11) zwischen Lagerrohr (2) und Monolith (3) bzw. Partikelfilter hineinreicht (Figuren 5, 6, 7 und 8).

6. Abgasvorrichtung nach Anspruch 5,
**dadurch gekennzeichnet,**
**daß** das in den Lagermattenspalt (11) hineinreichende Axialende des Innentrichter-Endabschnitts (8) im Bereich des Axialendes des Lagerrohrs (2) einen radial nach außen erweiterten Absatz (12) aufweist (Figuren 5, 6, 7 und 8).

7. Abgasvorrichtung nach Anspruch 6,
**dadurch gekennzeichnet,**
**daß** im Absatz (12) der Monolith (3) bzw. der Partikelfilter mit Abstand eingepaßt ist.

8. Abgasvorrichtung nach einem der Ansprüche 1 bis 7,
**dadurch gekennzeichnet,**
**daß** der Innentrichter (6) auf dem Umfang verteilte flächige, gewölbte Wärmespannungs-Ausgleichszonen (13) aufweist, und vorzugsweise Versteifungssicken vorgesehen sind.

9. Abgasvorrichtung nach einem der Ansprüche 2 bis 8,
**dadurch gekennzeichnet,**
**daß** das Axialende des Innentrichter-Endabschnitts (8) an der zugewandten Stirnseite einer Lagermatte (4) abgestützt ist (Figuren 3, 4, 6, 7, 8 und 9).

10. Abgasvorrichtung nach einem der Ansprüche 2 bis 8,
**dadurch gekennzeichnet,**
**daß** das Axialende des Innentrichter-Endabschnitts (8) an einem stirnseitigen Kantenschutz einer Lagermatte (4), insbesondere einer Quellmatte, abgestützt ist, wobei der Kantenschutz vorzugsweise eine Imprägnierung ist.

11. Abgasvorrichtung nach einem der Ansprüche 2 bis 8,
**dadurch gekennzeichnet,**
**daß** das Axialende des Innentrichter-Endabschnitts (8) an der zugewandten Stirnseite eines Drahtgestrickringes (14) abgestützt ist, der im Lagermattenspalt (11) axialendseitig vorgelagert ist (Figur 1, 2 und 5).

12. Abgasvorrichtung nach einem der Ansprüche 2 bis 11,
**dadurch gekennzeichnet,**
**daß** das Axialende des Außentrichter-Endabschnitts (7) ein radial nach außen gerichter Umfangsflansch (15) des Außentrichters (5) ist (Figuren 1, 3, 6, 8 und 9).

13. Abgasvorrichtung nach einem der Ansprüche 2 bis 12,
**dadurch gekennzeichnet,**
**daß** das Axialende des Außentrichter-Endabschnitts (7) ein radial nach innen gerichteter Umfangsflansch (16) des Außentrichters (5) ist.

14. Abgasvorrichtung nach einem der Ansprüche 4 bis 12,
**dadurch gekennzeichnet,**
**daß** das Axialende des Außentrichter-Endabschnitts (7) ein koaxial und auf dem Außenumfang dicht beabstandet zum Lagerrohr-Endabschnitt (9) verlaufender Umfangsabschnitt (17) ist (Figuren 4 und 5).

15. Abgasvorrichtung nach einem der Ansprüche 1 bis 14,
**dadurch gekennzeichnet,**
**daß** im aufgeweiteten koaxialen Axialende (18) des Innentrichter-Endabschnitts (9) die Lagermatte (4) umgeschlagen oder mit einem separaten Lagermatten-Umfangsabschnitt (19) aufgedoppelt ist (Figuren 6 und 9).

16. Abgasvorrichtung nach einem der Ansprüche 2 bis 15,
**dadurch gekennzeichnet,**
**daß** das Axialende des Innentrichter-Endabschnitts (8) nach außen umgeschlagen ist (Figuren 7, 8 und 9).

17. Abgasvorrichtung nach einem der Ansprüche 2 bis 15,
**dadurch gekennzeichnet,**
**daß** das Axialende des Innentrichter-Endabschnitts (8) ein radial nach außen gerichteter Umfangsflansch (22) ist (Figuren 1 bis 6).

18. Abgasvorrichtung nach einem der Ansprüche 1 bis 17,
**dadurch gekennzeichnet,**
**daß** der zwischen Außentrichter (5) und Innentrichter (6) gelegene Ringraum ein Luftspalt ist.

19. Abgasvorrichtung nach einem der Ansprüche 1 bis 17,
**dadurch gekennzeichnet,**
**daß** der zwischen Außentrichter (5) und Innentrichter (6) gelegene Ringraum zumindest teilweise mit einem wärmeisolierenden Material (10) ausgefüllt ist.

20. Abgasvorrichtung nach einem der Ansprüche 1 bis 19,
**dadurch gekennzeichnet,**
**daß** die Lagermatte (4) eine elastische Keramikfasermatte, vorzugsweise aus kristallinen Aluminiumoxidfasern oder aus amorphen Aluminiumsilikatfasern, ist.

21. Abgasvorrichtung nach einem der Ansprüche 1 bis 20,
**dadurch gekennzeichnet,**
**daß** an jedem der beiden Axialenden des Lagerrohrs (2) ein Abgastrichter vorgesehen ist, wobei der eine Abgastrichter ein Einlaßtrichter (20) und der andere Abgastrichter ein Auslaßtrichter (21) ist.

22. Abgasvorrichtung nach Anspruch 21,
**dadurch gekennzeichnet,**
**daß** Einlaßtrichter (20) und Auslaßtrichter (21) zumindest großenteils gleich aufgebaut sind.

23. Abgasvorrichtung nach einem der Ansprüche 1 bis 22,
**dadurch gekennzeichnet,**
**daß** der Außentrichter (5) und der Innentrichter (6) Tiefziehteile sind.

24. Abgasvorrichtung nach einem der Ansprüche 1 bis 22,
**dadurch gekennzeichnet,**
**daß** der Außentrichter (5) und der Innentrichter (6) Drück-, Wickel- oder Halbschalenteile sind.

## Claims

1. Exhaust-gas apparatus (1) of an exhaust system, in particular motor vehicle catalytic converter or particulate filter of modular design, having at least one exhaust-gas funnel (20, 21) and an axially connected bearing tube (2), in each case made from sheet metal, in which at least one monolith (3) or particulate filter is insulated and mounted with a bearing mat (4) that surrounds the monolith or particulate filter arranged in between,
the exhaust-gas funnel being of double-walled structure made up of two shaped parts and comprising an outer funnel (5) and an inner funnel (6), an outer funnel end portion (7) bearing metallically against and being secured, in particular by welding, to the bearing tube (2), whereas an inner funnel end portion (8) is located without contact at a distance from the bearing tube (2), from the outer funnel end portion (7) and from the monolith (3) or particulate filter,
**characterized**
**in that** the bearing tube (2) has a widened axial end (18).

2. Exhaust-gas apparatus according to Claim 1, **characterized in that** the inner funnel end portion (8) is located at the radially central height of the bearing matt (4) and is located on the periphery of the inner funnel (6).

3. Exhaust-gas apparatus according to Claim 2, **characterized in that** the axial end of the bearing tube end portion (9) has an extension portion (30) which projects axially with respect to the bearing mat (4) and the monolith (3) or particulate filter (Figure 3).

4. Exhaust-gas apparatus according to Claim 2, **characterized in that** the axial ends of the outer funnel end portion (7) and the inner funnel end portion (8) are flush with one another (Figures 1, 2 and 9).

5. Exhaust-gas apparatus according to Claim 2, **characterized in that** the axial end of the inner funnel end portion (8) extends into a bearing mat gap (11) between bearing tube (2) and monolith (3) or particulate filter (Figures 5, 6, 7 and 8).

6. Exhaust-gas apparatus according to Claim 5, **characterized in that** the axial end of the inner funnel end portion (8) which extends into the bearing mat gap (11), in the region of the axial end of the bearing tube (2), has a radially outwardly widened shoulder (12) (Figures 5, 6, 7 and 8).

7. Exhaust-gas apparatus according to Claim 6, **characterized in that** the monolith (3) or particulate filter is fitted in the shoulder (12) at a distance therefrom.

8. Exhaust-gas apparatus according to one of Claims 1 to 7, **characterized in that** the inner funnel (6) has areal, curved thermal stress compensation zones (13) distributed over the circumference, and preferably reinforcing beads are provided.

9. Exhaust-gas apparatus according to one of Claims 2 to 8, **characterized in that** the axial end of the inner funnel end portion (8) is supported against the facing end side of a bearing mat (4) (Figures 3, 4, 6, 7, 8 and 9).

10. Exhaust-gas apparatus according to one of Claims 2 to 8, **characterized in that** the axial end of the inner funnel end portion (8) is supported against an end-side edge protection of a bearing mat (4), in particular a swellable mat, the edge protection preferably being an impregnation.

11. Exhaust-gas apparatus according to one of Claims 2 to 8, **characterized in that** the axial end of the inner funnel end portion (8) is supported against the facing end side of a knitted wire mesh ring (14) which is mounted upstream at the axial end side in the bearing mat gap (11) (Figures 1, 2 and 5).

12. Exhaust-gas apparatus according to one of Claims 2 to 11, **characterized in that** the axial end of the outer funnel end portion (7) is a radially outwardly directed circumferential flange (15) of the outer funnel (5) (Figures 1, 3, 6, 8 and 9).

13. Exhaust-gas apparatus according to one of Claims 2 to 12, **characterized in that** the axial end of the outer funnel end portion (7) is a radially inwardly directed circumferential flange (16) of the outer funnel (5).

14. Exhaust-gas apparatus according to one of Claims 4 to 12, **characterized in that** the axial end of the outer funnel end portion (7) is a circumferential portion (17) which runs coaxially and sealed against the outer circumference at a distance from the bearing tube end portion (9) (Figures 4 and 5).

15. Exhaust-gas apparatus according to one of Claims 1 to 14, **characterized in that** in the widened coaxial axial end (18) of the inner funnel end portion (9), the bearing mat (4) is turned over or doubled up with a separate bearing mat circumferential portion (19) (Figures 6 and 9).

16. Exhaust-gas apparatus according to one of Claims 2 to 15, **characterized in that** the axial end of the inner funnel end portion (8) is turned over towards the outside (Figures 7, 8 and 9).

17. Exhaust-gas apparatus according to one of Claims 2 to 15, **characterized in that** the axial end of the inner funnel end portion (18) is a radially outwardly directed circumferential flange (22) (Figures 1 to 6).

18. Exhaust-gas apparatus according to one of Claims 1 to 17, **characterized in that** the annular space located between the outer funnel (5) and the inner funnel (6) is an air gap.

19. Exhaust-gas apparatus according to one of Claims 1 to 17, **characterized in that** the annular space located between outer funnel (5) and inner funnel (6) is at least partially filled with a thermally insulating material (10).

20. Exhaust-gas apparatus according to one of Claims 1 to 19, **characterized in that** the bearing mat (4) is an elastic ceramic fibre mat, preferably comprising crystalline aluminium oxide fibres or amorphous aluminium silicate fibres.

21. Exhaust-gas apparatus according to one of Claims 1 to 20, **characterized in that** an exhaust-gas funnel is provided at each of the two axial ends of the bearing tube (2), one exhaust-gas funnel being an inlet funnel (20) and the other exhaust-gas funnel being an outlet funnel (21).

22. Exhaust-gas apparatus according to Claim 21, **characterized in that** the inlet funnel (20) and outlet funnel (21) are of at least largely identical construction.

23. Exhaust-gas apparatus according to one of Claims 1 to 22, **characterized in that** the outer funnel (5) and the inner funnel (6) are deep-drawn parts.

24. Exhaust-gas apparatus according to one of Claims 1 to 22, **characterized in that** the outer funnel (5) and the inner funnel (6) are pressed parts, wound parts or half-shell parts.

## Revendications

1. Dispositif d'échappement (1) d'un système d'échappement, en particulier catalyseur ou filtre à particules de construction modulaire pour véhicule automobile, avec au moins un cône d'échappement (20, 21) et un tube de montage (2) axialement raccordé, tous deux en tôle, au moins un monolithe (3) ou filtre à particules étant isolé et monté dans le tube avec intercalation d'une natte de montage (4) entourant le monolithe ou filtre à particules,
sachant que le cône d'échappement est réalisé à double paroi en étant composé de deux pièces façonnées et comprend un cône extérieur (5) et un cône intérieur (6) et sachant qu'une partie terminale (7) de cône extérieur est métalliquement appliquée et fixée, notamment soudée, sur le tube de montage (2), tandis qu'une partie terminale (8) de cône intérieur est placée sans contact à distance du tube de montage (2), de la partie terminale (7) de cône extérieur et du monolithe (3) ou filtre à particules,
**caractérisé en ce que** le tube de montage (2) présente une extrémité axiale élargie (18).

2. Dispositif d'échappement selon la revendication 1, **caractérisé en ce que** la partie terminale (8) de cône intérieur est placée à hauteur radialement médiane de la natte de montage (4) et sur la périphérie du cône intérieur (6).

3. Dispositif d'échappement selon la revendication 2, **caractérisé en ce que** l'extrémité axiale de la partie terminale (9) de tube de montage présente un tronçon prolongateur (30) qui dépasse axialement par rapport à la natte de montage (4) et au monolithe (3) ou filtre à particules (Fig. 3).

4. Dispositif d'échappement selon la revendication 2, **caractérisé en ce que** les extrémités axiales de la partie terminale (7) de cône extérieur et de la partie terminale (8) de cône intérieur s'étendent en affleurement l'une de l'autre (Fig. 1, 2 et 9).

5. Dispositif d'échappement selon la revendication 2, **caractérisé en ce que** l'extrémité axiale de la partie terminale (8) de cône intérieur s'étend dans une fente (11) de natte de montage entre le tube de montage (2) et le monolithe (3) ou filtre à particules (Fig. 5, 6, 7 et 8).

6. Dispositif d'échappement selon la revendication 5, **caractérisé en ce que** l'extrémité axiale de la partie terminale (8) de cône intérieur qui s'étend dans la fente (11) de natte de montage présente, dans la région de l'extrémité axiale du tube de montage (2), un décrochement (12) élargi radialement vers l'extérieur (Fig. 5, 6, 7 et 8).

7. Dispositif d'échappement selon la revendication 6, **caractérisé en ce que** le monolithe (3) ou le filtre à particules est emboîté à distance dans le décrochement (12).

8. Dispositif d'échappement selon l'une quelconque des revendications 1 à 7, **caractérisé en ce que** le cône intérieur (6) présente des zones surfaciques bombées (13) de compensation des tensions thermiques réparties sur la périphérie, et des moulures de renforcement sont de préférence prévues.

9. Dispositif d'échappement selon l'une quelconque des revendications 2 à 8, **caractérisé en ce que** l'extrémité axiale de la partie terminale (8) de cône intérieur est soutenue sur le côté frontal d'une natte de montage (4) qui est tourné vers elle (Fig . 3, 4, 6, 7, 8 et 9).

10. Dispositif d'échappement selon l'une quelconque des revendications 2 à 8, **caractérisé en ce que** l'extrémité axiale de la partie terminale (8) de cône intérieur est soutenue sur une bordure frontale de protection d'une natte de montage (4), notamment d'une natte gonflante, la bordure de protection consistant de préférence en une imprégnation.

11. Dispositif d'échappement selon l'une quelconque des revendications 2 à 8, **caractérisé en ce que** l'extrémité axiale de la partie terminale (8) de cône intérieur est soutenue sur le côté frontal d'une bague (14) en mailles métalliques qui est tourné vers elle, la bague étant montée devant elle à l'extrémité axiale dans la fente (11) de natte de montage (Fig. 1, 2 et 5) .

12. Dispositif d'échappement selon l'une quelconque des revendications 2 à 11, **caractérisé en ce que** l'extrémité axiale de la partie terminale (7) de cône extérieur est une bride périphérique (15), dirigée radialement vers l'extérieur, du cône extérieur (5) (Fig. 1, 3, 6,8 et 9).

13. Dispositif d'échappement selon l'une quelconque des revendications 2 à 12, **caractérisé en ce que** l'extrémité axiale de la partie terminale (7) de cône extérieur est une bride périphérique (16), dirigée radialement vers l'intérieur, du cône extérieur (5).

14. Dispositif d'échappement selon l'une quelconque des revendications 4 à 12, **caractérisé en ce que** l'extrémité axiale de la partie terminale (7) de cône extérieur est une partie périphérique (17) s'étendant coaxialement à la partie terminale (9) de tube de montage et à petite distance sur la périphérie extérieure (Fig. 4 et 5).

15. Dispositif d'échappement selon l'une quelconque des revendications 1 à 14, **caractérisé en ce que** la natte de montage (4) est rabattue, ou redoublée au moyen d'une partie périphérique séparée (19) de natte de montage, dans l'extrémité axiale élargie (18), coaxiale, de la partie terminale (9) de cône intérieur (Fig. 6 et 9).

16. Dispositif d'échappement selon l'une quelconque des revendications 2 à 15, **caractérisé en ce que** l'extrémité axiale de la partie terminale (8) de cône intérieur est rabattue vers l'extérieur (Fig. 7, 8 et 9).

17. Dispositif d'échappement selon l'une quelconque des revendications 2 à 15, **caractérisé en ce que** l'extrémité axiale de la partie terminale (8) de cône intérieur est une bride périphérique (22) dirigée radialement vers l'extérieur (Fig. 1 à 6).

18. Dispositif d'échappement selon l'une quelconque des revendications 1 à 17, **caractérisé en ce que** l'espace annulaire situé entre le cône extérieur (5) et le cône intérieur (6) est un espace d'air.

19. Dispositif d'échappement selon l'une quelconque des revendications 1 à 17, **caractérisé en ce que** l'espace annulaire situé entre le cône extérieur (5) et le cône intérieur (6) est rempli au moins partiellement d'un matériau calorifuge (10).

20. Dispositif d'échappement selon l'une quelconque des revendications 1 à 19, **caractérisé en ce que** la natte de montage (4) est une natte élastique de fibres céramiques, constituée de préférence de fibres cristallines d'alumine ou de fibres amorphes de silicate d'aluminium.

21. Dispositif d'échappement selon l'une quelconque des revendications 1 à 20, **caractérisé en ce qu'**un cône d'échappement est prévu à chacune des deux extrémités axiales du tube de montage (2), l'un des cônes d'échappement étant un cône d'entrée (20) et l'autre cône d'échappement un cône de sortie (21).

22. Dispositif d'échappement selon la revendication 21, **caractérisé en ce que** le cône d'entrée (20) et le cône de sortie (21) sont au moins en grande partie de structure identique.

23. Dispositif d'échappement selon l'une quelconque des revendications 1 à 22, **caractérisé en ce que** le cône extérieur (5) et le cône intérieur (6) sont des pièces embouties.

24. Dispositif d'échappement selon l'une quelconque des revendications 1 à 22, **caractérisé en ce que** le cône extérieur (5) et le cône intérieur (6) sont des pièces pressées, des pièces enroulées ou des pièces en demi-coques.
